# EUROPEAN PATENT APPLICATION

(11) **EP 2 106 182 A1**
(43) Date of publication of application: **30.09.2009**
(21) Application number: 09155003.8
(22) Date of filing: 12.03.2009
(51) Int. Cl.: H04W 36/32, H04W 16/24

(54) **Base transceiver station, mobile station, and wireless communication method**

(30) Priority: 28.03.2008 JP 2008085136
(71) Applicant: Fujitsu Limited, Kawasaki-shi, Kanagawa 211-8588 (JP)
(72) Inventor: Kawasaki, Toshio, Kawasaki-shi Kanagawa 211-8588 (JP)
(74) Representative: Ward, James Norman

(57) **Abstract**

A base transceiver station used in a wireless communication system in which the location of each base transceiver station antenna is included in a coverage area of another base transceiver station antenna, the base transceiver station including a measuring unit measuring a distance between a mobile station and a base transceiver station antenna to which the mobile station is communicatively connected. The base transceiver station includes a switching unit switching the communication connection of the mobile station to another base transceiver station antenna when the distance measured by the measuring unit becomes less than or equal to a predetermined value.

## Description

### BACKGROUND OF THE INVENTION

### 1. Field of the Invention

The present invention relates to a base transceiver station, a mobile station, and a wireless communication method. The present invention can be used as a base transceiver station, a mobile station, and a wireless communication method that switches a base transceiver station antenna that is connected to the mobile station as the mobile station moves.

### 2. Description of the Related Art

Cellular mobile communication systems are widely used and a wide variety of information services are provided by using wireless communications, and along with this proliferation has come a demand for ever higher speeds and wider bandwidths of wireless communications. In order to meet the demand, in recent years, many base transceiver station antennas have been installed to reduce the area covered by each base transceiver station antenna and to reduce the number of simultaneous connections to base transceiver station antennas, thereby increasing the bandwidth available to each mobile station.

In such a mobile communication system, various problems arise when mobile stations move quickly. For example, a mobile station may pass through many cells in a short time, which significantly increases the number of handovers. Accordingly, the processing load for handover control increases. Furthermore, the Doppler effect increases the difference between a receive frequency and a nominal carrier frequency (carrier frequency deviation) and the carrier frequency deviation significantly changes depending on the direction in which the mobile station is moving. Consequently, the quality of wireless communication degrades.

To address these problems, a method has been proposed in which all cells along a road use the same frequency to reduce handover control processing load (see for example Japanese Laid-Open Patent Publication No. 2000-311290). Another method has been proposed in which a modulation coding method is changed according to the speed of motion of a mobile station to alleviate degradation of the quality of wireless communication due to the Doppler effect (see for example Japanese Laid-Open Patent Publication No. 2002-009734).

However, these methods still have the problem that carrier frequency deviation changes steeply. Consider a mobile station that passes by a base transceiver station antenna. Because of the Doppler effect, there is a positive carrier frequency deviation while the mobile station is approaching the base transceiver station antenna and there is a negative carrier frequency deviation while the mobile station is moving away from the base transceiver station antenna. Therefore, the carrier frequency deviation changes steeply at the instant when the mobile station passes by the base transceiver station antenna.

In this case, the mobile station is unable to follow the steep change in receive frequency and can temporarily fail in channel estimation. As a result, the quality of the wireless communication significantly degrades and, at worst, the communication link is disconnected.

An object is to provide a base transceiver station, a mobile station, and a wireless communication method that minimize steep changes in carrier frequency deviation due to the Doppler effect to provide stable wireless communication.

### SUMMARY OF THE INVENTION

According to an aspect of the embodiments, a base transceiver station used in a wireless communication system in which the location of each base transceiver station antenna is included in a coverage area of another base transceiver station antenna, the base transceiver station including a measuring unit measuring a distance between a mobile station and a base transceiver station antenna to which the mobile station is communicatively connected. The base transceiver station includes a switching unit switching the connection of the mobile station to another base transceiver station antenna when the distance measured by the measuring unit becomes less than or equal to a predetermined value.
The object and advantages of the embodiments will be realized and attained by means of the elements and combinations particularly pointed out in the claims.
It is to be understood that both the foregoing general description and the following detailed description are exemplary and explanatory only and are not restrictive of the invention, as claimed.

### BRIEF DESCRIPTION OF THE DRAWINGS

FIG. 1 is a diagram schematically illustrating an embodiment.
FIG. 2 is a diagram illustrating a system configuration according to a first embodiment.
FIG. 3 is a diagram illustrating a base transceiver station according to the first embodiment.
FIG. 4 is a diagram illustrating a mobile station according to the first embodiment.
FIG. 5 is a flowchart illustrating a procedure of timing control according to the first embodiment.
FIG. 6 is a sequence diagram illustrating a flow of a handover process according to the first embodiment.
FIG. 7 is a diagram illustrating changes in carrier frequency in the first embodiment.
FIG. 8 is a flowchart illustrating a procedure of timing control according to a second embodiment.
FIG. 9 is a diagram illustrating changes in carrier frequency in the second embodiment.
FIG. 10 is a diagram illustrating a base transceiver station according to a third embodiment.
FIG. 11 is a diagram illustrating a mobile station according to the third embodiment.
FIG. 12 is a sequence diagram illustrating a flow of a handover process according to the third embodiment.
FIG. 13 is a diagram illustrating a system configuration according to a fourth embodiment.
FIG. 14 is a diagram illustrating a base transceiver station according to the fourth embodiment.
FIG. 15 is a diagram illustrating a data structure of a handover definition table.
FIG. 16 is a diagram illustrating a system configuration according to a fifth embodiment.
FIG. 17 is a flowchart illustrating a procedure of timing control according to the fifth embodiment.
FIG. 18 is a diagram illustrating changes in carrier frequency in the fifth embodiment.
FIG. 19 is a diagram illustrating a system configuration according to a sixth embodiment.
FIG. 20 is a diagram illustrating changes in carrier frequency in the sixth embodiment.
FIG. 21 is a diagram illustrating a system configuration according to a seventh embodiment.
FIG. 22 is a diagram illustrating changes in carrier frequency in the seventh embodiment.

### DESCRIPTION OF EMBODIMENTS

Embodiments will be described below in detail with reference to the accompanying drawings.

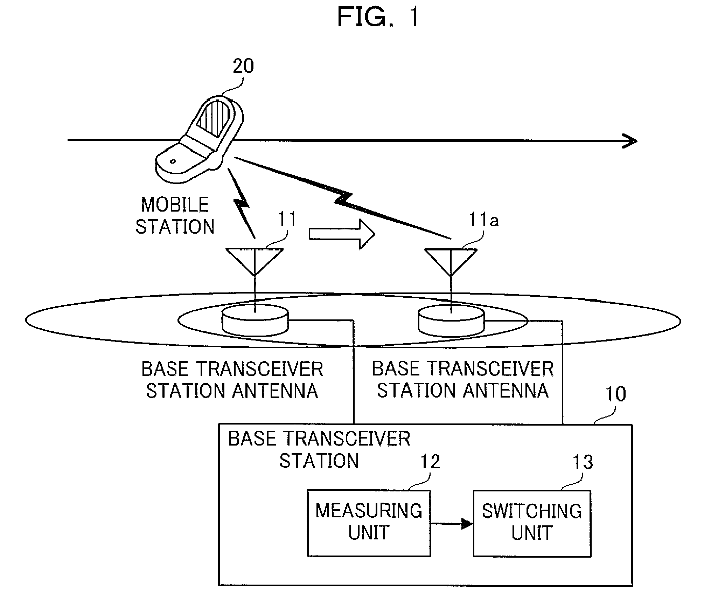

FIG. 1 schematically illustrates an embodiment. The wireless communication system illustrated in FIG. 1 includes a base transceiver station 10, base transceiver station antennas 11 and 11a, and a mobile station 20. The base transceiver station 10 is communicatively connected to the base transceiver station antennas 11 and 11a. The location of the base transceiver station antenna 11 is included in the coverage area of the base transceiver station antenna 11a. Similarly, the location of the base transceiver station antenna 11a is included in the coverage area of the base transceiver station antenna 11. The mobile station 20 is capable of connecting to the base transceiver station antenna 11 or 11a to perform wireless communication.

It is assumed here that the mobile station 20 is currently located in the coverage area of the base transceiver station antenna 11, is in connection with the base transceiver station antenna and is performing wireless communication. It is also assumed that the mobile station 20 is moving quickly (at a speed higher than or equal to a predetermined threshold) toward the base transceiver station antennas 11 and 11a. In this situation, the base transceiver station 10 controls switching between the base transceiver station antennas to which the mobile station 20 is to be connected.

The base transceiver station 10 includes a measuring unit 12 and a switching unit 13. The measuring unit 12 constantly measures the distance between the mobile station 20 and the base transceiver station antenna 11 to which the mobile station 20 is connected. For example, the measuring unit 12 measures the distance based on radio signals received at each of the multiple base transceiver station antennas from the mobile station 20. The switching unit 13 monitors the distance measured by the measuring unit 12. When the mobile station 20 comes sufficiently close to the base transceiver station antenna 11 (when the distance becomes less than or equal to a predetermined threshold), the switching unit 13 performs control to switch the connection of the mobile station 20 from the base transceiver station antenna 11 to the base transceiver station antenna 11a.

In this way, switching of the connection to the base transceiver station antenna 11a occurs before the mobile station 20 passes by the base transceiver station antenna 11 (before the mobile station 20 starts moving away from the base transceiver station antenna 11). Accordingly, the mobile station 20 performs wireless communication with only the base transceiver station antenna toward which the mobile station 20 is moving, and therefore a steep change in carrier frequency deviation, which would otherwise occur at the instant at which mobile station 20 quickly passes by the base transceiver station antenna 11, can be avoided and stable wireless communication can be provided.

Although the base transceiver station 10 is connected to the base transceiver station antennas 11, 11a, in the foregoing description, alternatively, a base transceiver station may be installed at the location of each base transceiver station antenna 11, 11a. In this case, the processing functions of the measuring unit 12 and the switching unit 13 may be implemented in the base transceiver station installed at the location of the base transceiver station antenna 11 (the base transceiver station from which switching is made) or may be implemented in the base transceiver station installed at the location of the base transceiver station antenna 11a (the base transceiver station to which switching is made). Alternatively, the processing functions of the measuring unit 12 and the switching unit 13 may be implemented on the mobile station 20.

Although, in the forgoing example, the mobile station 20 performs wireless communication with only the base transceiver station antenna toward which the mobile station 20 is moving, alternatively, the mobile station 20 may perform wireless communication with only the base transceiver station antenna from which the mobile station 20 is moving away. In this case, the measuring unit 12 constantly measures the distance between the mobile station 20 and the base transceiver station antenna 11a to which the mobile station 20 is to be connected next. When the mobile station 20 starts moving away from the base transceiver station antenna 11a (when the distance starts to increase), the switching unit 13 performs control to switch the connection of the mobile station 20 from the base transceiver station antenna 11 to the base transceiver station antenna 11a. This control method also provides a similar effect to that described above.

### First embodiment

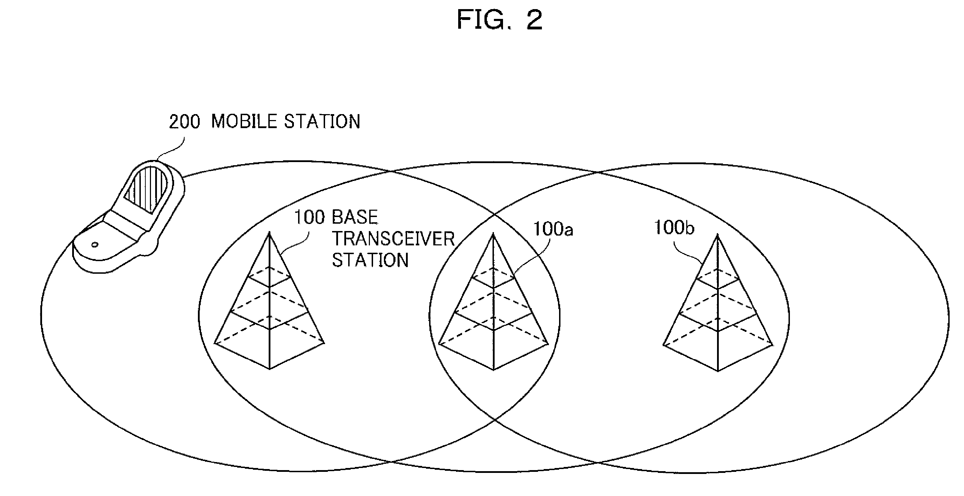

FIG. 2 illustrates a system configuration according to a first embodiment. The wireless communication system according to the first embodiment is a mobile communication system in which a mobile station communicates with base transceiver stations. The wireless communication system includes base transceiver stations 100, 100a, 100b and a mobile station 200.

The base transceiver stations 100, 100a, and 100b are wireless communication apparatuses that wirelessly communicate with mobile stations located in their respective coverage areas. Although not illustrated, the base transceiver stations 100, 100a, and 100b are interconnected by wire or wirelessly so that they can bi-directionally communicate with one another. The mobile station 200 is a wireless terminal apparatus that connects to one of the base transceiver stations 100, 100a, and 100b to perform wireless communication. The mobile station 200 may be a mobile phone, for example.

The location of each of the base transceiver stations 100, 100a, and 100b is included in the area covered by at least one other base transceiver station. In particular, the base transceiver station 100 is located in the area covered by the base transceiver station 100a. The base transceiver station 100a is located in the area covered by the base transceiver stations 100 and 100b. The base transceiver station 100b is located in the area covered by the base transceiver station 100a.

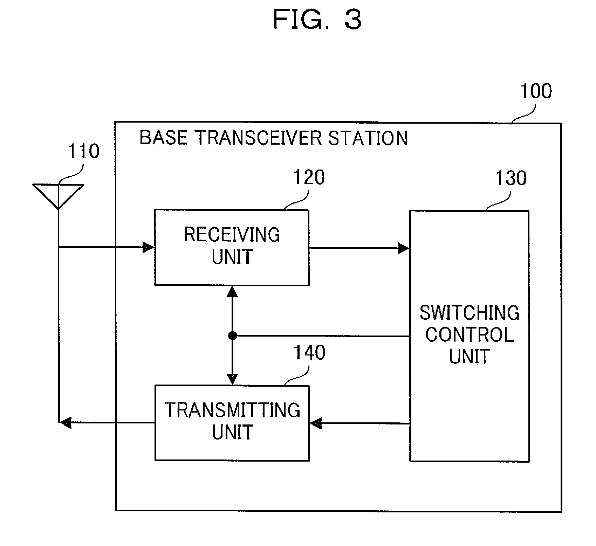

FIG. 3 illustrates a base transceiver station according to the first embodiment. The base transceiver station 100 includes a transmitting and receiving antenna 110, a receiving unit 120, a switching control unit 130, and a transmitting unit 140. The base transceiver stations 100a and 100b can be implemented with the same configuration as that of the base transceiver station 100.

The transmitting and receiving antenna 110 is a radio antenna for both transmission and reception. The transmitting and receiving antenna 110 outputs a radio signal received from a mobile station 200, shown in Fig. 2, to the receiving unit 120. The transmitting and receiving antenna 110 wirelessly transmits a transmission signal obtained from the transmitting unit 140.

The receiving unit 120 demodulates and decodes a received signal obtained from the transmitting and receiving antenna 110 and extracts user data and control information from the received signal. The receiving unit 120 then outputs the extracted control information to the switching control unit 130.

The switching control unit 130 controls switching to and from another base transceiver station (handover) based on control information obtained from the receiving unit 120. The switching control unit 130 then instructs the transmitting unit 140 to generate and transmit control information concerning control of base transceiver station switching.

The transmitting unit 140 generates control information to be sent to the mobile station 200 in accordance with the instruction from the switching control unit 130. The transmitting unit 140 also generates broadcast information indicating the location of the base transceiver station 100. The transmitting unit 140 modulates and encodes the user data directed to the mobile station 200 and control information and broadcast information to be sent to the mobile station 200 to generate a transmission signal. The transmitting unit 140 then outputs the generated transmission signal to the transmitting and receiving antenna 110.

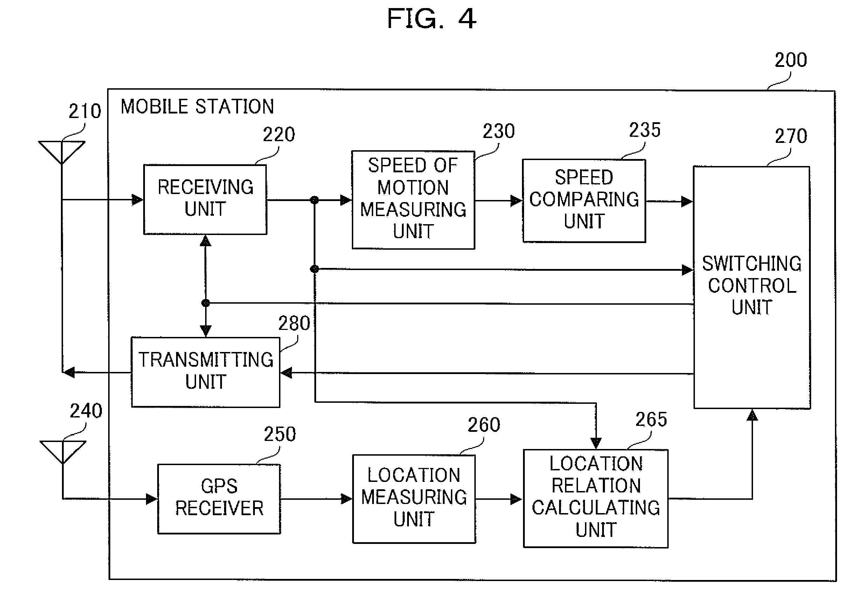

FIG. 4 illustrates a mobile station according to the first embodiment. The mobile station 200 includes a transmitting and receiving antenna 210, a receiving unit 220, a speed of motion measuring unit 230, a speed comparing unit 235, a GPS antenna 240, a GPS receiver 250, a location measuring unit 260, a location relation calculating unit 265, a switching control unit 270, and a transmitting unit 280.

The transmitting and receiving antenna 210 is a radio antenna for both transmission and reception. The transmitting and receiving antenna 210 outputs radio signals received from the base transceiver stations 100, 100a, and 100b, shown in Fig. 2, to the receiving unit 220. The transmitting and receiving antenna 210 also wirelessly transmits a transmission signal obtained from the transmitting unit 280.

The receiving unit 220 demodulates and decodes a received signal obtained from the transmitting and receiving antenna 210 and extracts user data, control information, and broadcast information directed to the mobile station 200 from the received signal. The receiving unit 220 then performs reproduction processing for the extracted user data according to the type of the data. The receiving unit 220 outputs the extracted control information to the switching control unit 270 and outputs the extracted broadcast information to the location relation calculating unit 265. The receiving unit 220 reports the frequency of the received signal to the speed of motion measuring unit 230.

The speed of motion measuring unit 230 measures the difference between the frequency of the received signal reported from the receiving unit 220 and a nominal carrier frequency (carrier frequency deviation). The speed of motion measuring unit 230 then estimates the current speed of motion of the mobile station 200 from the carrier frequency deviation and reports the estimated speed of motion to the speed comparing unit 235.

The speed comparing unit 235 compares the current speed of motion reported from the speed of motion measuring unit 230 with a predetermined threshold and, if the current speed of motion is greater than or equal to the threshold, notifies the switching control unit 270 of the fact.

The GPS antenna 240 is a receiving antenna that receives GPS signals. The GPS antenna 240 outputs GPS signals received from each of the multiple GPS satellites to the GPS receiver 250.

The GPS receiver 250 obtains information indicating the distance to each of the multiple GPS satellites from the signal received at the GPS antenna 240. The GPS receiver 250 then outputs the information indicating the distances to each of the multiple GPS satellites to the location measuring unit 260.

The location measuring unit 260 uses the distance information from each of the multiple GPS satellites obtained from the GPS receiver 250 to determine the current location of the mobile station 200. The location measuring unit 260 then reports the determined current location to the location relation calculating unit 265.

The location relation calculating unit 265 calculates the distance between the mobile station 200 and the base transceiver station to which the mobile station 200 is currently connected based on the location of each base transceiver station indicated in broadcast information obtained from the receiving unit 220 and the current location of the mobile station 200 reported from the location measuring unit 260. The location relation calculating unit 265 reports the calculated distance to the switching control unit 270.

The switching control unit 270 controls switching to a base transceiver station based on control information obtained from the receiving unit 220 and the distances reported from the location relation calculating unit 265. In particular, when notification that the speed of motion is greater than or equal to the threshold is not provided from the speed comparing unit 235, the switching control unit 270 performs ordinary switching control based on control information obtained from the receiving unit 220. On the other hand, when notification that the speed of motion is greater than or equal to the threshold is provided from the speed comparing unit 235, the switching control unit 270 controls switching based on the distances reported from the location relation calculating unit 265 so as to avoid a steep change of carrier frequency deviation.

When the switching control unit 270 determines to switch to a base transceiver station, the switching control unit 270 directs the transmitting unit 280 to generate and transmit control information concerning the switching control. The switching control unit 270 also controls receiving processing performed by the receiving unit 220 in accordance with the change of the connection.

The transmitting unit 280 generates control information for the base transceiver stations 100, 100a, and 100b according to the direction from the switching control unit 270. The transmitting unit 280 modulates and encodes the user data and control information to generate a transmission signal. The transmitting unit 280 then outputs the generated transmission signal to the transmitting and receiving antenna 210.

A process performed in the wireless communication system having the configuration described above will now be described in detail.

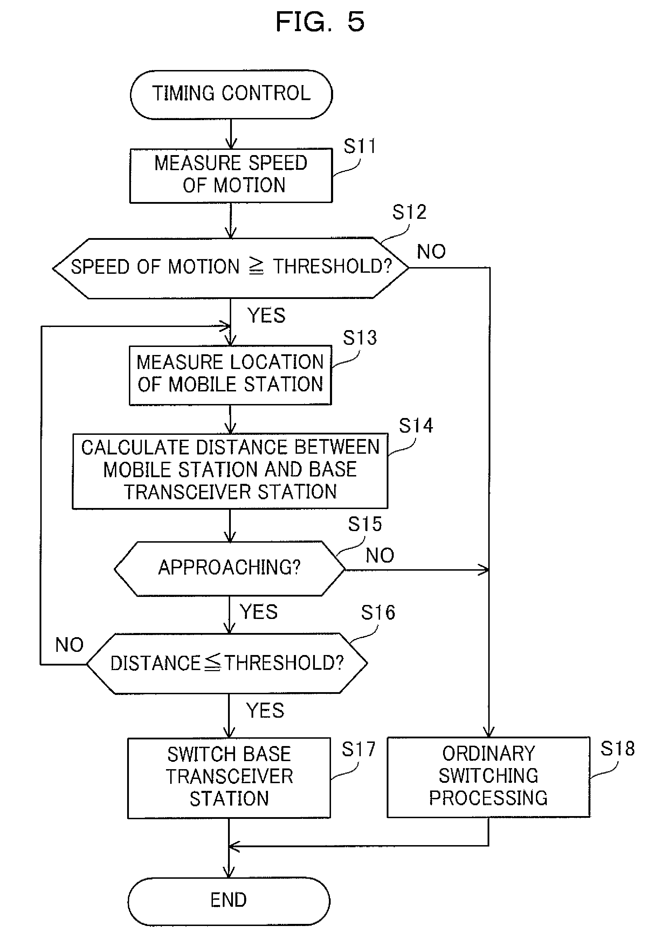

FIG. 5 is a flowchart illustrating a procedure of timing control according to the first embodiment. The process is performed at a mobile station 200. The process illustrated in FIG. 5 will be described below in the order of the step numbers.

[Step S11] The speed of motion measuring unit 230 measures the current speed of motion of the mobile station 200 based on the carrier frequency deviation of a received signal.
[Step S12] The speed comparing unit 235 determines whether or not the speed of motion measured at step S11 is greater than or equal to a predetermined threshold.
If the speed of motion is greater than or equal to the threshold, the process proceeds to step S13; if the speed of motion is less than the threshold, the process proceeds to step S18.

[Step S13] The location measuring unit 260 measures the current location of the mobile station 200 based on GPS signals.
[Step S14] The location relation calculating unit 265 calculates the distance between the mobile station 200 and a base transceiver station to which the mobile station 200 is connected from the current location of the mobile station 200 measured at step S13 and the location of the base transceiver station indicated by received broadcast information.

[Step S15] The switching control unit 270 monitors the distance calculated at step S14 and compares the distance with the previously calculated distance.
The switching control unit 270 determines whether the distance has decreased, that is, whether the mobile station 200 is approaching the base transceiver station to which it is connected. If the mobile station 200 is approaching the base transceiver station, the process proceeds to step S16; if the mobile station 200 is moving away, the process proceeds to step S18.

[Step S16] The switching control unit 270 determines whether the latest distance calculated at step S14 is less than or equal to a predetermined threshold. If the distance is less than or equal to the threshold, the process proceeds to step S17; if the distance is greater than the threshold, the process proceeds to step S13.

[Step S17] The switching control unit 270 immediately switches the connection to another base transceiver station. The base transceiver station to which the connection is to be switched is determined based on information such as the strengths of radio signals received from each of base transceiver stations.

[Step S18] The switching control unit 270 performs ordinary switching control processing. For example, the switching control unit 270 switches the connection when the strength of a radio signal received from the base transceiver station to which the mobile station 200 is connected decreases below the strength of a radio signal received from another base transceiver station.

In this way, the mobile station 200 constantly measures the distance to the base transceiver station to which the mobile station 200 is connected while moving quickly. When the mobile station 200 comes within a predetermined distance from the base transceiver station to which the mobile station 200 is connected, the mobile station 200 switches the connection to another base transceiver station before the mobile station 200 passes by the base transceiver station (before the mobile station 200 starts to move away from the base transceiver station). On the other hand, the mobile station 200 performs ordinary switching control while moving at low speed.

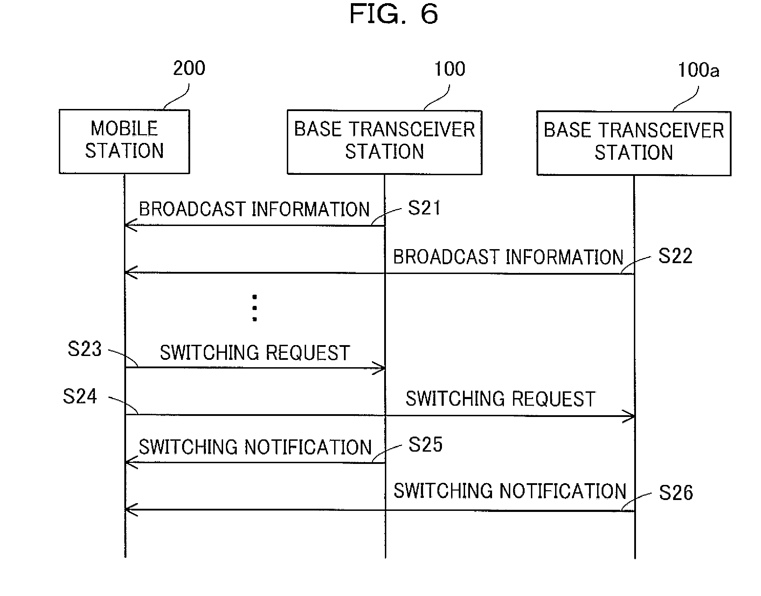

FIG. 6 is a sequence diagram illustrating a handover process flow according to the first embodiment. It is assumed here that a mobile station 200 is switching the connection from a base transceiver station 100 to another base transceiver station 100a. The process illustrated in FIG. 6 will be described below in the order of step numbers.

[Step S21] The base transceiver station 100 constantly wirelessly transmits broadcast information including information indicating the location of the base transceiver station 100.
[Step S22] Like the base transceiver station 100, the base transceiver station 100a constantly wirelessly transmits broadcast information including information including the location of the base transceiver station 100a.

[Step S23] The mobile station 200 performs the process illustrated in FIG. 5. When the mobile station 200 determines to switch the connection from the base transceiver station 100 to the base transceiver station 100a, the mobile station 200 sends to the base transceiver station 100 control information indicating a switching request.

[Step S24] The mobile station 200 sends to the base transceiver station 100a control information indicating a switching request as in step S23.
[Step S25] In response to the switching request sent from the mobile station 200, the base transceiver station 100 performs preparatory processing for switching the connection of the mobile station 200. Then, the base transceiver station 100 sends control information to the mobile station 200 representing switching notification that the base transceiver station 100 has prepared itself for switching.

[Step S26] Like the base transceiver station 100, the base transceiver station 100a performs preparatory processing for switching the connection of the mobile station 200 in response to the switching request sent from the mobile station 200. Then, the base transceiver station 100a sends control information to the mobile station 200 representing switching notification that the base transceiver station 100a has prepared itself for switching.

In this way, the mobile station 200 receives broadcast information that the base transceiver stations 100 and 100a are constantly transmitting. The mobile station 200 measures its speed of motion, current location, and the distance to the base transceiver station 100 to determine whether the mobile station 200 needs to switch (handover) the connection. When the mobile station 200 determines that it needs to switch, the mobile station 200 sends switching requests to the base transceiver station 100 from which the mobile station 200 is to switch and the base transceiver station 100a to which the mobile station 200 is to switch. After completing preparation for switching, the base transceiver stations 100 and 100a send switching notifications to the mobile station 200.

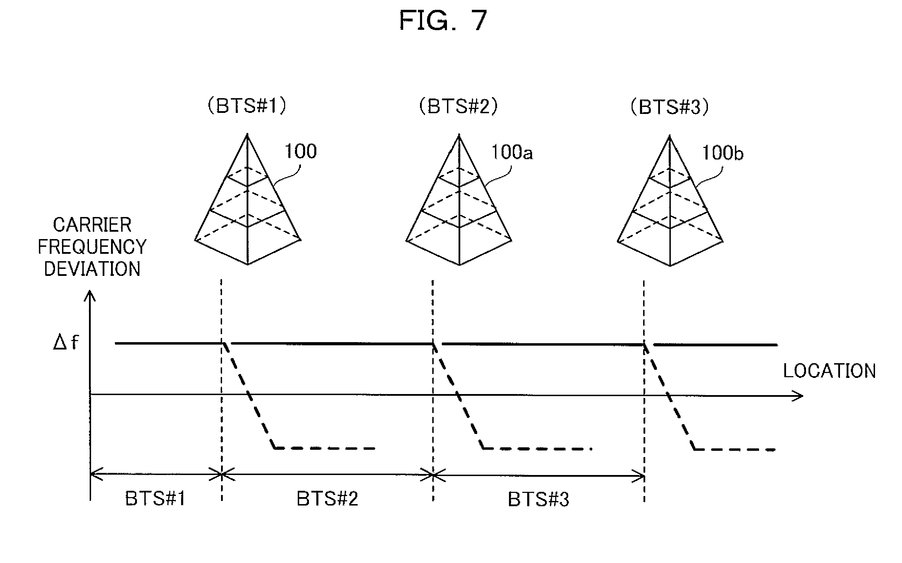

FIG. 7 illustrates changes in carrier frequency in the first embodiment. Here, a case is considered in which a mobile station 200 passes by base transceiver stations 100, 100a, and 100b in this order, while maintaining wireless communication.

When the mobile station 200 is not moving quickly, ordinary switching control is performed. That is, the mobile station 200 passes by the base transceiver station 100 while maintaining the connection with the base transceiver station 100. Before the mobile station 200 passes by the base transceiver station 100, there is a positive carrier frequency deviation. After the mobile station 200 passes by the base transceiver station 100, there is a negative carrier frequency deviation. When subsequently the strength of a radio signal received from the base transceiver station 100a increases above the strength of a radio signal received from the base transceiver station 100, the mobile station 200 switches the connection from the base transceiver station 100 to the base transceiver station 100a.

Similarly, the mobile station 200 passes by the base transceiver station 100a while maintaining the connection with the base transceiver station 100a.
Before the mobile station 200 passes by the base transceiver station 100a, there is a positive carrier frequency deviation. After the mobile station 200 passes by the base transceiver station 100a, there is a negative carrier frequency deviation. When the strength of a radio signal received from the base transceiver station 100b increases above the strength of a radio signal received from the base transceiver station 100a, the mobile station 200 switches the connection from the base transceiver station 100a to the base transceiver station 100b.

On the other hand, when the mobile station 200 is moving quickly, switching processing is performed before the mobile station 200 passes by each base transceiver station. That is, when the mobile station 200 comes within a predetermined distance of the base transceiver station 100, the mobile station 200 switches the connection from the base transceiver station 100 to the base transceiver station 100a before passing by the base transceiver station 100. The switching processing can be performed before the mobile station 200 passes by the base transceiver station 100 because the location of the base transceiver station 100 is included in the area covered by the base transceiver station 100a. The mobile station 200 passes by the base transceiver station 100 while connected with the base transceiver station 100a. Accordingly, there is a positive carrier frequency deviation (Δf) before and after the mobile station 200 passes by the base transceiver station 100.

Similarly, when the mobile station 200 comes within a predetermined distance of the base transceiver station 100a, the mobile station 200 switches the connection from the base transceiver station 100a to the base transceiver station 100b before passing by the base transceiver station 100a. The switching processing can be performed before the mobile station 200 passes by the base transceiver station 100a because the location of the base transceiver station 100a is included in the area covered by the base transceiver station 100b. The mobile station 200 passes by the base transceiver station 100a while communicating with the base transceiver station 100b. Accordingly, there is a positive carrier frequency deviation (Δf) before and after the mobile station 200 passes by the base transceiver station 100a.

The wireless communication system according to the first embodiment described above allows a mobile station 200 that is moving at a high speed to communicate with only a base transceiver station toward which the mobile station 200 is moving and to not communicate with a base transceiver station from which the mobile station 200 is moving away. Accordingly, there is always a positive carrier frequency deviation in a radio signal transmitted and received between each of base transceiver stations 100, 100a, 100b and the mobile station 200. As a result, a steep change in carrier frequency deviation due to high-speed passing of the mobile station 200 by the base transceiver stations 100, 100a, 100b is avoided and more stable wireless communication is provided.

While the speed of motion measuring unit 230 described above measures the speed of motion based on the carrier frequency deviation of a radio signal received by the mobile station 200, alternatively, the speed of motion measuring unit 230 may measure the speed of motion based on the rate of change of the current location of the mobile station 200. While the location measuring unit 260, described above, measures the current location based on GPS signals, the location measuring unit 260 may estimate the current location by using Advanced Forward Link Trilateration (AFLT). That is, the location measuring unit 260 may estimate the current location based on synchronization signals received from multiple base transceiver stations. Alternatively, the location measuring unit 260 may determine, based on a carrier frequency deviation, whether the mobile station 200 is approaching a base transceiver station to which it is connected.

### Second embodiment

A second embodiment will now be described in detail with reference to the drawings. The description will focus on differences from the first embodiment and description of items similar to those in the first embodiment will be omitted. A wireless communication system according to the second embodiment allows a mobile station to communicate with a base transceiver station from which the mobile station is moving away instead of a base transceiver station toward which the mobile station is moving.

The configuration of the wireless communication system according to the second embodiment is similar to that of the first embodiment illustrated in FIG. 2. Base transceiver stations and mobile stations in the second embodiment can be implemented with similar configurations as those of the base transceiver station and mobile station in the first embodiment illustrated in FIGS. 3 and 4, except that the location measuring unit 260 and switching control unit 270 of the mobile station 200 in the second embodiment have functions different from those in the first embodiment. Processing according to the second embodiment will be detailed by using the same reference numerals that are used in the description of the first embodiment.

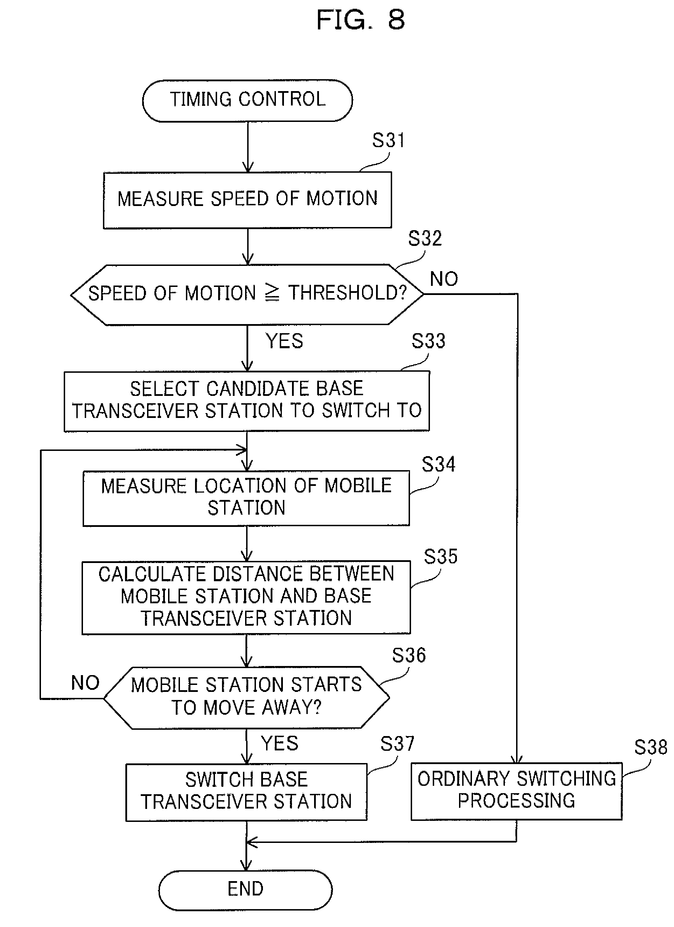

FIG. 8 is a flowchart illustrating a procedure of timing control according to the second embodiment.
The process is performed at a mobile station 200. The process illustrated in FIG. 8 will be described below in the order of step numbers.

[Step S31] The speed of motion measuring unit 230 measures the current speed of motion of the mobile station 200 based on the carrier frequency deviation of a received signal.
[Step S32] The speed comparing unit 235 determines whether or not the speed of motion measured at step S31 is greater than or equal to a predetermined threshold.
If the speed of motion is greater than or equal to the threshold, the process proceeds to step S33; if the speed of motion is less than the threshold, the process proceeds to step S38.

[Step S33] The switching control unit 270 selects at least one of the base transceiver stations 100, 100a, and 100b as a candidate base transceiver station to switch to. The candidate can be determined based on the strengths of radio signals received from the base transceiver stations for example.

[Step S34] The location measuring unit 260 measures the current location of the mobile station 200 based on GPS signals.
[Step S35] The location relation calculating unit 265 calculates the distance between the mobile station 200 and the base transceiver station selected at step S33 from the current location of the mobile station 200 measured at step S34 and the location of the selected base transceiver station indicated by broadcast information received.

[Step S36] The switching control unit 270 monitors the distance calculated at step S35 and determines whether the distance has started to increase after it has decreased, that is, whether the mobile station 200 has started to move away from the base transceiver station selected at step S33. If the mobile station 200 has started to move away, the process proceeds to step S37; if the mobile station is approaching the base transceiver station, the process proceeds to step S34.

[Step S37] The switching control unit 270 switches the connection to the base transceiver station selected at step S33. The switching is preferably performed after a predetermined distance has been traveled or after a predetermined time period has elapsed, rather than immediately after the mobile station 200 has started to move away, to ensure that the switching occurs only after changes in the carrier frequency deviation have converged.

[Step S38] The switching control unit 270 performs ordinary switching control processing. For example, the switching control unit 270 performs connection switching when the strength of the radio signal received from the base transceiver station to which the mobile station 200 is connected decreases below the strength of a radio signal received from another base transceiver station.

In this way, the mobile station 200 constantly measures the distance to a candidate base transceiver station to which the mobile station 200 is to connect next while the mobile station 200 is moving quickly. After passing by the candidate base transceiver station (after starting to move away from the candidate base transceiver station), the mobile station 200 switches the connection to that base transceiver station. On the other hand, when the mobile station 200 is moving at a low speed, the mobile station 200 performs switching control in an ordinary way.

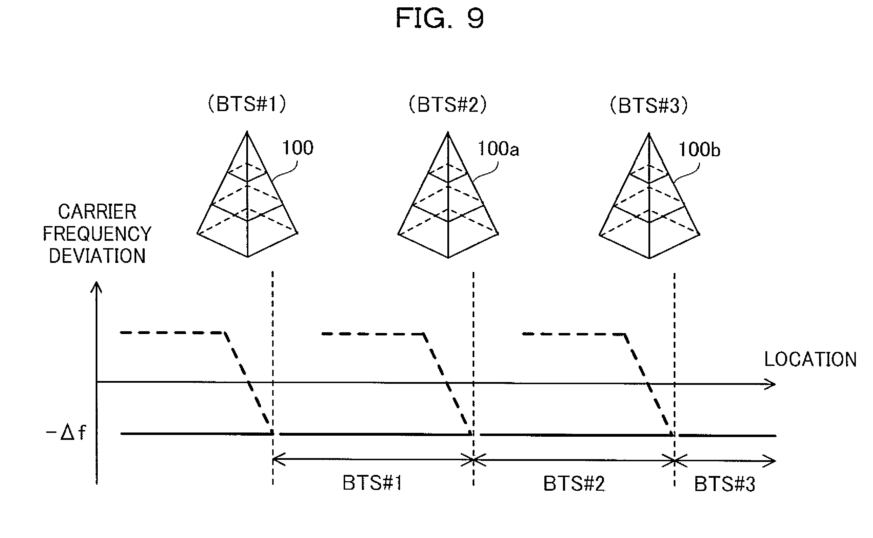

FIG. 9 illustrates changes in carrier frequency in the second embodiment. Here, a case is considered in which a mobile station 200 quickly passes by base transceiver stations 100, 100a, and 100b in this order while maintaining wireless communication.

The mobile station 200 connects to a base transceiver station 100 after passing by the base transceiver station 100. As a result, a negative carrier frequency deviation (-Δf) occurs in radio signals transmitted and received between the base transceiver station 100 and the mobile station 200. The mobile station 200 maintains the connection with the base transceiver station 100 until the mobile station 200 passes by the base transceiver station 100a.

Similarly, after passing by the base transceiver station 100a, the mobile station 200 connects to the base transceiver station 100a. The switching processing can be performed after passing by because the location of the base transceiver station 100a is included in the area covered by the base transceiver station 100. As a result, there is a negative carrier frequency deviation (-Δf) before and after the mobile station 200 passes by the base transceiver station 100a. The mobile station 200 maintains communication with the base transceiver station 100a until the mobile station 200 passes by the base transceiver station 100b.

The wireless communication system according to the second embodiment described above allows a mobile station 200 that is moving at a high speed to communicate with only a base transceiver station from which the mobile station 200 is moving away and not to communicate with a base transceiver station toward which the mobile station is moving. Accordingly, there is always a negative carrier frequency deviation in radio signals transmitted and received between the base transceiver stations 100, 100a, 100b and the mobile station 200. As a result, steep changes in carrier frequency deviation due to the mobile station 200 quickly passing by the base transceiver stations 100, 100a, 100b are avoided and more stable wireless communication is provided.

As has been described with respect to the first embodiment, the speed of motion of the mobile station 200 may be measured based on the rate of change of the current location of the mobile station 200, instead of a carrier frequency deviation. Furthermore, instead of using GPS signals to measure the current location, AFLT may be used to estimate the current location. Determination as to whether the mobile station 200 has started to move away from a base transceiver station may be made based on a carrier frequency deviation.

### Third embodiment

A third embodiment will now be described in detail with reference to the drawings. The description will focus on differences from the first embodiment described above and items similar to those in the first embodiment will be omitted. In a wireless communication system according to the third embodiment, a base transceiver station, instead of a mobile station, controls switching of the connection.

The configuration of the wireless communication system according to the third embodiment is similar to that of the wireless communication system according to the first embodiment shown in FIG. 2. However, the mobile station 200 in the third embodiment does not control switching but instead base transceiver stations 100, 100a, 100b control switching. Configurations of base transceiver stations 300, 300a and a mobile station 400, which correspond to the base transceiver stations 100, 100a and the mobile station 200 in the first embodiment, will be described below.

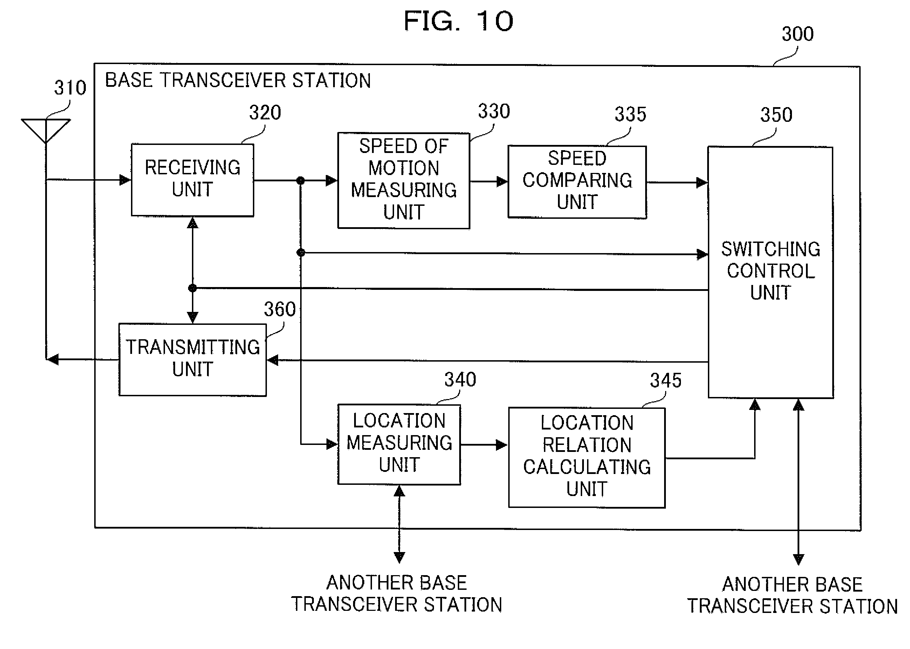

FIG. 10 illustrates a base transceiver station according to the third embodiment. The base transceiver station 300 includes a transmitting and receiving antenna 310, a receiving unit 320, a speed of motion measuring unit 330, a speed comparing unit 335, a location measuring unit 340, a location relation calculating unit 345, a switching control unit 350, and a transmitting unit 360. Another base transceiver station 300a can be implemented with the same configuration as that of the base transceiver station 300.

The transmitting and receiving antenna 310 is a radio antenna for both transmission and reception. The transmitting and receiving antenna 310 outputs a radio signal received from a mobile station 400 to the receiving unit 320. The transmitting and receiving antenna 310 wirelessly transmits a transmission signal obtained from the transmitting unit 360.

The receiving unit 320 demodulates and decodes the received signal obtained from the transmitting and receiving antenna 310 and extracts user data and control information from the received signal. The receiving unit 320 outputs the extracted control information to the switching control unit 350. Furthermore, the receiving unit 320 reports the frequency of the received signal to the speed of motion measuring unit 330. The receiving unit 320 also extracts a predetermined pilot signal (known signal) from the received signal and outputs the pilot signal to the location measuring unit 340.

The speed of motion measuring unit 330 measures the difference between the frequency of the received signal reported from the receiving unit 320 and a nominal carrier frequency (carrier frequency deviation). The speed of motion measuring unit 330 estimates the current speed of motion of the mobile station 400 from the carrier frequency deviation and reports the estimated speed of motion to the speed comparing unit 335.

The speed comparing unit 335 compares the speed of motion of the mobile station 400 reported from the speed of motion measuring unit 330 with a predetermined threshold. If the current speed of motion is greater than or equal to the threshold, the speed comparing unit 335 notifies the switching control unit 350 of the fact.

The location measuring unit 340 measures the conditions of communication (such as a transmission delay time) with the mobile station 400 based on the pilot signal obtained form the receiving unit 320. If the base transceiver station 300 is not in connection with the mobile station 400, the location measuring unit 340 sends information indicating the communication conditions to the base transceiver station to which the mobile station 400 is connected. On the other hand, if the base transceiver station 300 is in connection with the mobile station 400, the location measuring unit 340 obtains information indicating communication conditions from another base transceiver station. The location measuring unit 340 estimates the current location of the mobile station 400 from the communication conditions of the base transceiver station 300 and the communication conditions of the other base transceiver station and reports the current location to the location relation calculating unit 345.

The location relation calculating unit 345 calculates the distance to the mobile station 400 based on the location of the base transceiver station 300 and the current location of the mobile station 400 reported from the location measuring unit 340. The location relation calculating unit 345 reports the calculated distance to the switching control unit 350.

If the base transceiver station 300 is connected to the mobile station 400, the switching control unit 350 controls switching of the connection of the mobile station 400 based on control information obtained from the receiving unit 320 and the distance reported from the location relation calculating unit 345. In particular, if the switching control unit 350 is not notified by the speed comparing unit 335 that the speed of motion is greater than or equal to a threshold, the switching control unit 350 performs ordinary switching control based on control information obtained form the receiving unit 320. On the other hand, if the switching control unit 350 is notified by the speed comparing unit 335 that the speed of motion is greater than or equal to the threshold, the switching control unit 350 controls switching based on the distance reported from the location relation calculating unit 345 so as to avoid a steep change of the carrier frequency deviation.

When the switching control unit 350 determines to switch the connection of the mobile station 400, the switching control unit 350 notifies the determination to the base transceiver station to which switching is to be made and directs the transmitting unit 360 to generate and transmit control information concerning the switching control to the mobile station 400. The switching control unit 350 also controls receive processing by the receiving unit 320 in accordance with the change of the connection of the mobile station 400.

On the other hand, if the base transceiver station 300 is currently not in connection with the mobile station 400 and is notified of switching of connection of the mobile station 400 by another base transceiver station, the switching control unit 350 performs control to allow the base transceiver station 300 to become a new base transceiver station to which the mobile station 400 is to be connected. The switching control unit 350 directs the transmitting unit 360 to generate and transmit control information concerning the switching control to the mobile station 400. The switching control unit 350 also controls receive processing by the receiving unit 320 in accordance with the change of connection of the mobile station 400.

The transmitting unit 360 generates control information to be sent to the mobile station 400 in accordance with the direction from the switching control unit 350. The transmitting unit 360 modulates and encodes the user data directed to the mobile station 400 and the control information to generate a transmission signal. The transmitting unit 360 then outputs the generated transmission signal to the transmitting and receiving antenna 310.

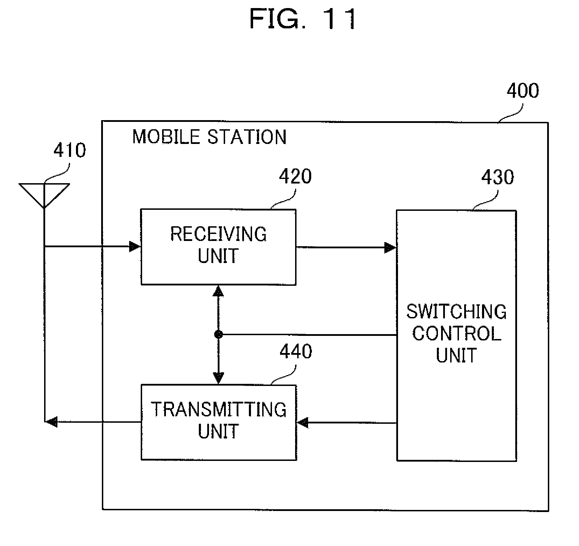

FIG. 11 illustrates a mobile station according to the third embodiment. The mobile station 400 includes a transmitting and receiving antenna 410, a receiving unit 420, a switching control unit 430, and a transmitting unit 440.
The transmitting and receiving antenna 410 is a radio antenna for both transmission and reception. The transmitting and receiving antenna 410 outputs radio signals received from base transceiver stations 300, 300a to the receiving unit 420. The transmitting and receiving antenna 410 wirelessly transmits a transmission signal obtained from the transmitting unit 440.

The receiving unit 420 demodulates and decodes the received signal obtained from the transmitting and receiving antenna 410 and extracts user data directed to the base transceiver station 300 and control information from the received signal. The receiving unit 420 then performs reproduction processing for the extracted user data according to the type of the data. The receiving unit 420 outputs the extracted control information to the switching control unit 430.

The switching control unit 430 controls base transceiver station switching based on the control information obtained from the receiving unit 420. The switching control unit 430 then directs the transmitting unit 440 to generate and transmit control information concerning switching control of the base transceiver station.

The transmitting unit 440 generates control information for the base transceiver stations 300, 300a in accordance with the direction from the switching control unit 430. The transmitting unit 440 modulates and encodes the user data and the control information to generate a transmission signal. The transmitting unit 440 then outputs the generated transmission signal to the transmitting and receiving antenna 410.

A process performed in the wireless communication system having the configuration described above will now be described in detail. The switching control procedure performed in the switching control unit 350 of a base transceiver station 300 is similar to that illustrated in FIG. 5 of the first embodiment. A flow of messages between base transceiver stations 300, 300a and a mobile station 400 will be described below.

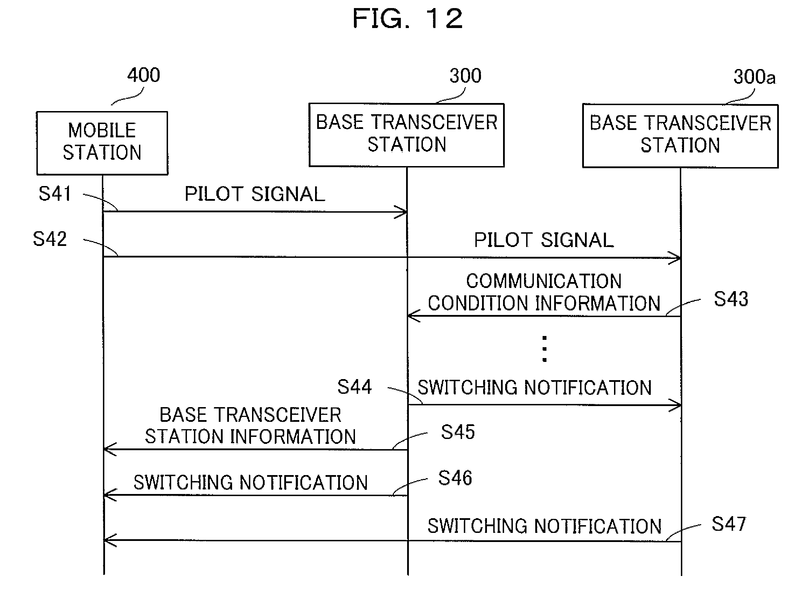

FIG. 12 is a sequence diagram illustrating a handover process flow according to the third embodiment. It is assumed here that the mobile station 400 switches from a base transceiver station 300 to another base transceiver station 300a. The process shown in FIG. 12 will be described below in the order of step numbers.

[Step S41] The mobile station 400 intermittently wirelessly transmits a predetermined pilot signal to the base transceiver station 300.
[Step S42] Similarly, the mobile station 400 intermittently wirelessly transmits the predetermined pilot signal to the base transceiver station 300a.

[Step S43] The base transceiver station 300a measures the conditions of communication (such as a transmission delay time) with the mobile station 400 based on the pilot signal received from the mobile station 400. The base transceiver station 300a sends information indicating the communication conditions to the base transceiver station 300.

[Step S44] The base transceiver station 300 estimates the current location of the mobile station 400 based on the pilot signal received from the mobile station 400 and the information obtained from the base transceiver station 300a. The base transceiver station 300 then performs the same process that is shown in FIG. 5. When it is determined to switch from the base transceiver station 300 to the base transceiver station 300a, the base transceiver station 300 transmits control information to the base transceiver station 300a representing switching notification that preparation for switching will be initiated.

[Step S45] The base transceiver station 300 sends information concerning the base transceiver station 300a to which the mobile station 400 is to be connected next as control information.
[Step S46] The base transceiver station 300 performs preparatory processing for changing the connection of the mobile station 400. The base transceiver station 300 sends control information to the mobile station 400 representing switching notification that the preparation for switching has been completed.

[Step S47] The base transceiver station 300a, like the base transceiver station 300, performs a preparation process for changing the connection of the mobile station 400. The base transceiver station 300a sends control information to the mobile station 400 representing a switching notification that the preparation for switching has been completed.

In this way, the mobile station 400 intermittently transmits a pilot signal to the base transceiver stations 300, 300a. The base transceiver station 300 that is currently in connection with the mobile station 400 measures the speed of motion and current location of the mobile station 400 and the distance to the mobile station 400 and determines whether switching of the connection is required. If the base transceiver station 300 determines that switching of the connection is required, the base transceiver station 300 sends a switching notification to the base transceiver station 300a and sends information concerning the base transceiver station 300a to the mobile station 400. When the base transceiver stations 300 and 300a become ready for switching, the base transceiver stations 300 and 300a send a switching notification to the mobile station 400.

The wireless communication system according to the third embodiment described above provides the same effects as those of the first embodiment. That is, while moving quickly, a mobile station 400 communicates with only a base transceiver station toward which the mobile station 400 is moving and ceases communication with a base transceiver station from which the mobile station 400 is moving away. Accordingly, there are always positive carrier frequency deviations in radio signals transmitted and received between the base transceiver stations 300, 300a and the mobile station 400. As a result, steep changes in carrier frequency deviation due to the mobile station 400 quickly passing by the base transceiver stations 300, 300a are avoided and a more stable wireless communication can be provided.

While the speed of motion measuring unit 330 described above measures the speed of motion based on carrier frequency deviations of radio signal received at the base transceiver station 300, the speed of motion measuring unit 330 may measure the speed of motion based on the rate of change of the current location of the mobile station 400. While the location measuring unit 340 described above uses pilot signals received at each of the base transceiver stations to estimate the current location, the location measuring unit 340 may obtain information indicating the current location measured at the mobile station 400 as control information if the mobile station 400 has a GPS facility. The third embodiment can be modified so that the mobile station 400 communicates with a base transceiver station from which the mobile station 400 is moving away, rather than a base transceiver station toward which the mobile station 400 is moving, as described with respect to the second embodiment.

### Fourth embodiment

A fourth embodiment will now be described in detail with reference to drawings. The description will focus on differences from the third embodiment described above and description of items similar to those in the third embodiment will be omitted.

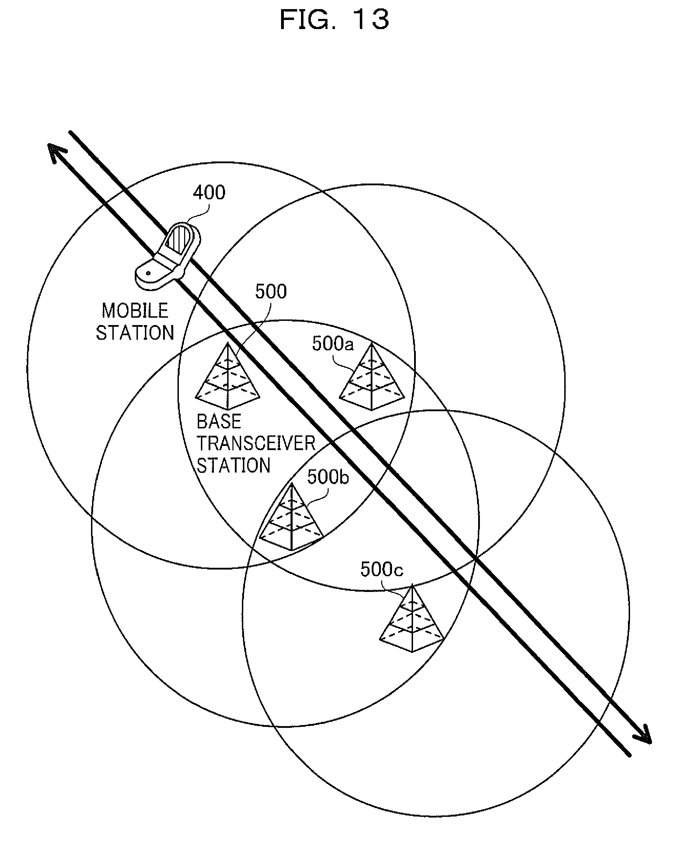

FIG. 13 illustrates a system configuration according to the fourth embodiment. A wireless communication system according to the fourth embodiment is intended to be used in a case where the route on which a mobile station that is moving at a high speed will travel can be identified in advance as in a case where base transceiver stations are installed along a freeway or a railroad. The wireless communication system includes mobile stations 400 and base transceiver stations 500, 500a, 500b, 500c. The mobile stations 400 are similar to that described in the third embodiment.

The base transceiver stations 500, 500a, 500b, 500c are wireless communication apparatuses capable of wirelessly communicating with a mobile station 400 while the mobile station 400 is in their coverage areas. The base transceiver stations 500, 500a, 500b, 500c are installed along a freeway. It should be noted that when a person in a car running on the freeway is carrying a mobile station 400, the route on which the mobile station 400 will travel is limited to "inbound" and "outbound".

The location of each of the base transceiver stations 500, 500a, 500b, and 500c is included in the area covered by at least one other base transceiver station. In particular, the base transceiver station 500 is located in the area covered by the base transceiver stations 500a and 500b. The base transceiver station 500a is located in the area covered by the base transceiver stations 500 and 500b. The base transceiver station 500b is located in the area covered by the base transceiver stations 500, 500a, and 500c. The base transceiver station 500c is located in the area covered by the base transceiver station 500b.

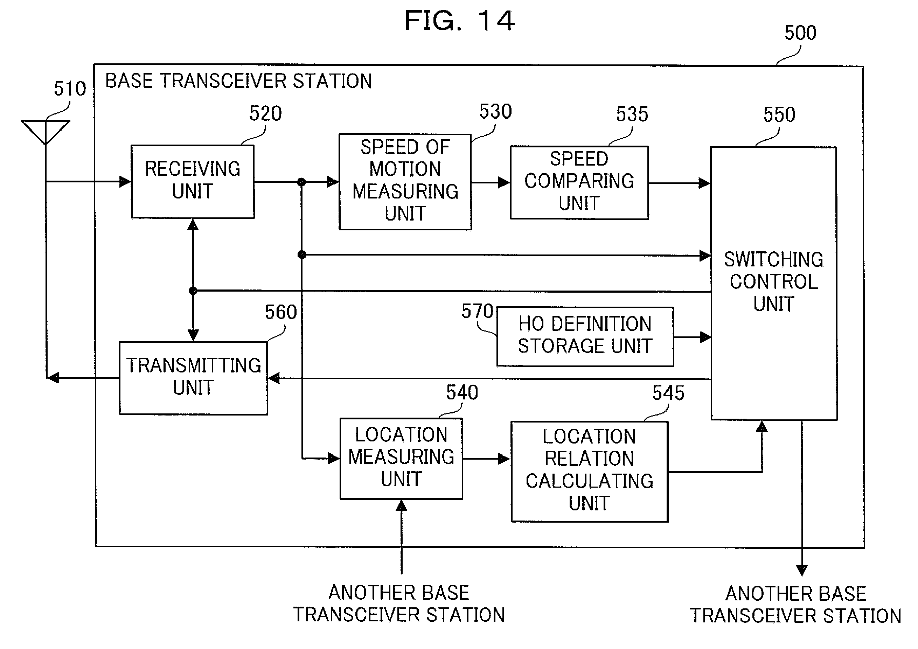

FIG. 14 illustrates a base transceiver station according to the fourth embodiment. The base transceiver station 500 includes a transmitting and receiving antenna 510, a receiving unit 520, a speed of motion measuring unit 530, a speed comparing unit 535, a location measuring unit 540, a location relation calculating unit 545, a switching control unit 550, a transmitting unit 560, and an HO definition storage unit 570. The base transceiver stations 500a, 500b, and 500c can be implemented with the same configuration as that of the base transceiver station 500.

The functions of the transmitting and receiving antenna 510, receiving unit 520, speed of motion measuring unit 530, speed comparing unit 535, location measuring unit 540, location relation calculating unit 545, and transmitting unit 560 are similar to those of the transmitting and receiving antenna 310, receiving unit 320, speed of motion measuring unit 330, speed comparing unit 335, location measuring unit 340, location relation calculating unit 345, and transmitting unit 360 of the base transceiver station 300 of the third embodiment shown in FIG. 10.

The switching control unit 550 controls switching of the connection of the mobile station 400 based on control information obtained from the receiving unit 520 and a distance reported from the location relation calculating unit 545. In particular, if a notification is not provided from the speed comparing unit 535 that the speed of motion of the mobile station 400 is greater than or equal to a threshold, the switching control unit 550 performs ordinary switching control based on control information obtained from the receiving unit 520. On the other hand, if the notification is provided from the speed comparing unit 535 that the speed of motion is greater than or equal to the threshold, the switching control unit 550 performs switching control described with respect to the third embodiment based on the distance reported from the location relation calculating unit 545.

In the latter case, the switching control unit 550 determines that the mobile station 400 is moving at a high speed on the freeway. The switching control unit 550 refers to handover definition information stored in the HO definition storage unit 570, rather than control information obtained from the receiving unit 520, to determine a base transceiver station to which the mobile station 400 is to be connected.

Stored in the HO definition storage unit 570 is handover definition information that defines switching patterns of the base transceiver station. In the handover definition information, two switching patterns are defined: one for a handover performed when a mobile station 400 is moving in the inbound lane of the freeway and one for a handover performed when a mobile station 400 is moving in the outbound lane of the freeway. The handover definition information stored in the HO definition storage unit 570 is read by the switching control unit 550 as necessary.

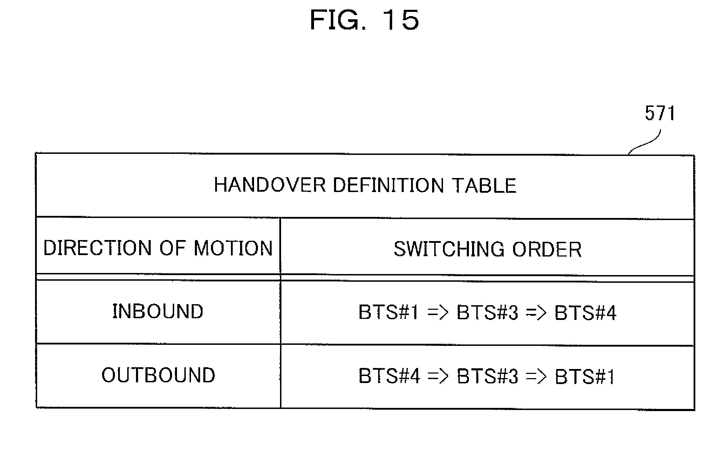

FIG. 15 illustrates a data structure of a handover definition table. The handover definition table 571 illustrated in FIG. 15 is stored in the HO definition storage unit 570. The handover definition table 571 includes a direction of motion column and a switching order column. The items of information in each row are associated with each other.

The movement direction column contains a character string indicating a route on which a mobile station 400 is moving. The switching order column contains a character string indicating the most appropriate order in which base transceiver stations are connected to the mobile station 400 traveling on the route indicated by the movement direction column. In the example in FIG. 15, it is defined that for a mobile station 400 moving in the inbound lane of the freeway, switching from the base transceiver station 500 to 500b to 500c is most appropriate. It is also defined that for a mobile station 400 moving in the outbound lane of the freeway, switching from the base transceiver station 500c to 500b to 500 is most appropriate.

By using the wireless communication system according to the fourth embodiment described above, the same effects as those of the third embodiment can be obtained. In addition, by using the wireless communication system according to the fourth embodiment, if a mobile station 400 is moving quickly, the most appropriate base transceiver station to which the mobile station 400 is to be connected can be reliably and quickly determined. That is, the number of handovers can be reduced to provide efficient wireless communication.

In a variation of the fourth embodiment, mobile stations 400, rather than the base transceiver stations 500, 500a, 500b, 500c, may control switching as has been described with respect to the first embodiment. In this case, each of the base transceiver stations 500, 500a, 500b, 500c holds a handover definition table 571. When a mobile station 400 enters a service area shown in FIG. 13, information in the handover definition table 571 may be sent to the mobile station 400. This variation enables the switching order to be flexibly set and changed.

### Fifth embodiment

A fifth embodiment will now be described in detail with reference to the drawings. The description will focus on differences from the third embodiment described above and description of items similar to those of the third embodiment will be omitted.

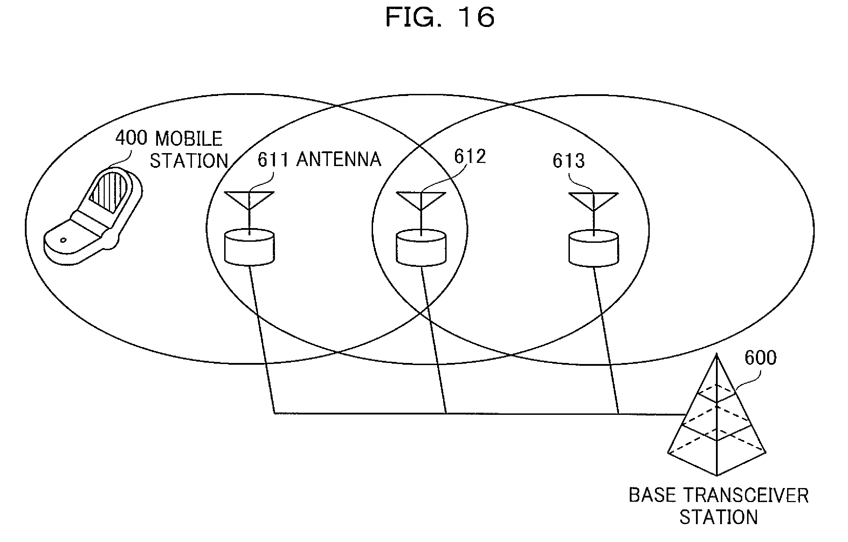

FIG. 16 illustrates a system configuration according to the fifth embodiment. In the wireless communication system according to the fifth embodiment, each base transceiver station has multiple antennas so that a mobile station can connect to the multiple antennas at a time to perform diversity communication. The wireless communication system includes a mobile station 400, a base transceiver station 600, and antennas 611, 612, 613. The mobile station is similar to that described in the third embodiment.

The base transceiver station 600 uses the antennas 611, 612, and 613 to perform multi-antenna communication. That is, the base transceiver station 600 is capable of concurrently obtaining received signals from each of the antennas 611, 612, and 613 and concurrently outputting transmission signals to each of the antennas 611, 612, and 613. The base transceiver station 600 controls switching between the antennas to which a mobile station 400 is to be connected.

The antennas 611, 612, and 613 transmit and receive radio signals to and from mobile stations in their coverage areas. The location of each of the antennas 611, 612, and 613 is included in the area covered at least one other antenna. In particular, the antenna 611 is located in the area covered by the antenna 612. The antenna 612 is located in the area covered by the antennas 611 and 613. The antenna 613 is located in the area covered by the antenna 612.

The configuration of the base transceiver station 600 of the fifth embodiment is basically similar to that of the base transceiver station 300 of the third embodiment illustrated in FIG. 10. However, receive processing and transmit processing are performed separately for each of the antennas 611, 612, and 613 in the fifth embodiment.

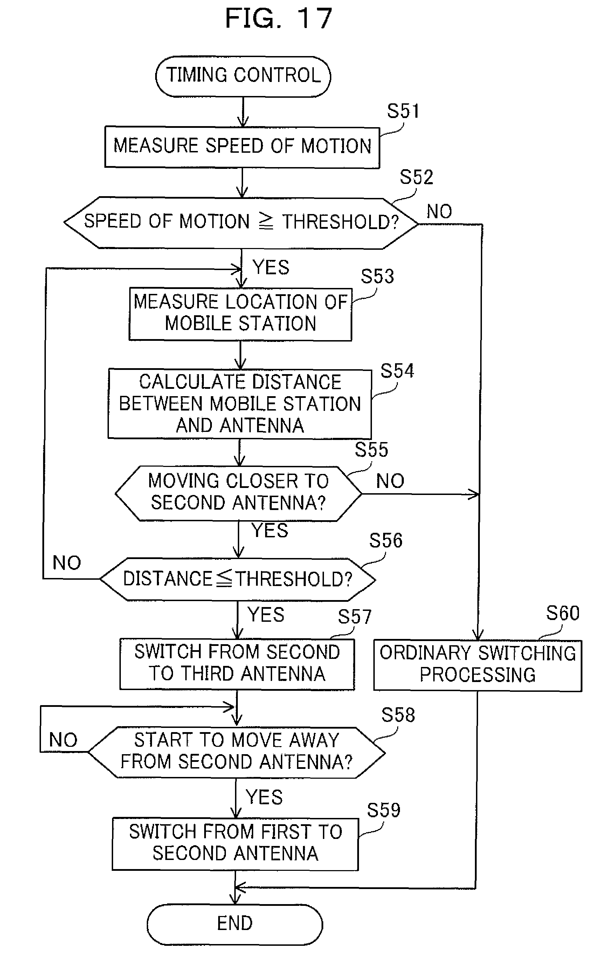

FIG. 17 is a flowchart illustrating a procedure of timing control of the fifth embodiment. Here, a case is considered in which a mobile station 400 connects to two antennas at a time. The process illustrated in FIG. 17 will be described below in the order of step numbers. In the following description, the first antenna to which the mobile station 400 has connected will be referred to as a first antenna and the next antenna to which the mobile station 400 has connected will be referred to as a second antenna.

[Step S51] The base transceiver station 600 measures the current speed of motion of the mobile station 400 based on a carrier frequency deviation of a signal received from the mobile station 400.
[Step S52] The base transceiver station 600 determines whether or not the speed of motion measured at step S51 is greater than or equal to a predetermined threshold.
If the speed of motion is greater than or equal to the threshold, the process proceeds to step S53. If the speed of motion is less than the threshold, the process proceeds to step S60.

[Step S53] The base transceiver station 600 measures the current location of the mobile station 400 based on pilot signals from the mobile station 400 received at each of the antennas 611, 612, and 613.

[Step S54] The base transceiver station 600 calculates the distance between the current location of the mobile station 400 measured at step S53 and a second antenna.
[Step S55] The base transceiver station 600 monitors the distance calculated at step S54 and compares the distance with the previously calculated distance. The base transceiver station 600 determines whether the distance has decreased, that is, whether the mobile station 400 is approaching the second antenna. If the mobile station 400 is approaching, the process proceeds to step S56. If the mobile station 400 is moving away from the second antenna, the process proceeds to step S60.

[Step S56] The base transceiver station 600 determines whether the latest distance calculated at step S54 is less than or equal to a predetermined threshold. If the distance is less than or equal to the threshold, the process proceeds to step S57; if the distance is greater than the threshold, the process proceeds to step S53.

[Step S57] The base transceiver station 600 immediately switches the connection of the mobile station 400 from the second antenna to another antenna (a third antenna). In doing so, the base transceiver station 600 maintains the connection of the mobile station 400 with the first antenna.
[Step S58] The base transceiver station 600 determines whether the distance between the mobile station 400 and the second antenna has started to increase after it has decreased, that is, whether the mobile station 400 has started to move away from the second antenna. If the mobile station 400 has started to move away, the process proceeds to step S59; if the mobile station 400 is still approaching, step S58 is repeated until the mobile station 400 starts to move away.

[Step S59] The base transceiver station 600 switches the connection of the mobile station 400 from the first antenna to the second antenna. In doing so, the base transceiver station 600 maintains the connection of the mobile station 400 with the third antenna.
[Step S60] The base transceiver station 600 performs ordinary switching control processing. For example, when the strength of a radio signal received from the first antenna becomes lower than the strength of a radio signal received from another antenna, the base transceiver station 600 switches the connection.

In this way, the base transceiver station 600 constantly measures the distance between a mobile station that is moving at a high speed and an antenna to which the mobile station is connected. When the mobile station 400 comes within a predetermined distance from the antenna to which the mobile station 400 is connected, the mobile station 400 switches its connection to another antenna before the mobile station 400 passes by the antenna (before moving away from the antenna) in connection with the mobile station 400. When the mobile station 400 passes by (starts to move away from) the antenna to which the mobile station 400 has been connected before switching, the mobile station 400 reconnects to the antenna to perform diversity communication.

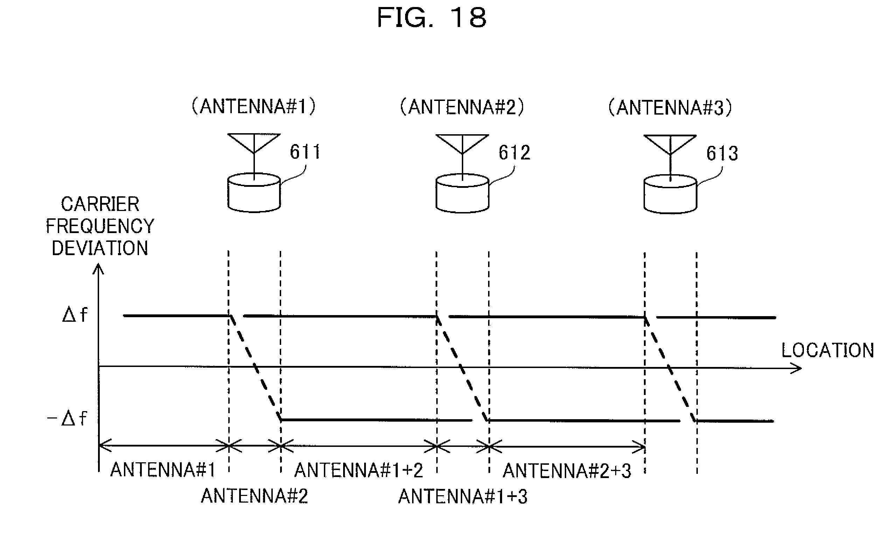

FIG. 18 illustrates changes in carrier frequency in the fifth embodiment. A case is considered here in which a mobile station 400 wirelessly communicates with antennas 611, 612, and 613 in this order, while passing by these antennas at a high speed.

First, when the mobile station 400 comes within a predetermined distance of the antenna 611, the mobile station 400 switches the connection to the antenna 612 before passing by the antenna 611. Then, the mobile station 400 passes by the antenna 611 while maintaining the connection with the antenna 612. Accordingly, when the mobile station 400 passes by the antenna 611, there is a positive carrier frequency deviation (Δf).

After passing by the antenna 611, the mobile station 400 reconnects to the antenna 611 while maintaining the connection with the antenna 612, thereby initiating diversity communication. At this time point, there are a negative carrier frequency deviation (-Δf) in the communication with the antenna 611 and a positive carrier frequency deviation (Δf) in the communication with the antenna 612.

Similarly, when the mobile station 400 comes within a predetermined distance of the antenna 612, the mobile station 400 switches the connection from the antenna 612 to the antenna 613 before passing by the antenna 612. In doing so, the mobile station 400 maintains the connection with the antenna 611. Then, the mobile station 400 passes by the antenna 612 while maintaining the connections with the antennas 611 and 613. Accordingly, when the mobile station 400 passes by the antenna 612, there are a negative carrier frequency deviation (-Δf) in the communication with the antenna 611 and a positive carrier frequency deviation (Δf) in the communication with the antenna 613.

After passing by the antenna 612, the mobile station 400 switches the connection from the antenna 611 to the antenna 612 while maintaining the connection with the antenna 613, thereby performing diversity communication. In doing this, there are a negative carrier frequency deviation (-Δf) in the communication with the antenna 612 and a positive carrier frequency deviation (Δf) in the communication with the antenna 613.

By using the wireless communication system according to the fifth embodiment described above, steep changes in carrier frequency deviation due to a mobile station 400 quickly passing by antennas 611, 612, 613 can be avoided while enabling diversity communication. Therefore, more stable high-quality wireless communication can be provided. Furthermore, since a base transceiver station 600 centrally switches connections with antennas 611, 612, 613, communications between base transceiver stations are not required and the load placed on the system when switching control is made is reduced.

In a variation of the fifth embodiment, mobile stations 400, rather than the base transceiver station 600, may control switching as has been described with respect to the first embodiment. Furthermore, as has been described in the third embodiment, the speed of motion may be measured based on the rate of change of the current location of a mobile station 400, instead of carrier frequency deviations. If a mobile station 400 includes a GPS facility, information indicating the current location measured at the mobile station 400 may be obtained as control information, instead of estimating the current location based on pilot signals. Determination may be made based on a carrier frequency deviation as to whether a mobile station is approaching or moving away.

### Sixth embodiment

A sixth embodiment will now be described in detail with reference to the drawings. The description will focus on differences from the third embodiment described above and description of items similar to those of the third embodiment will be omitted.

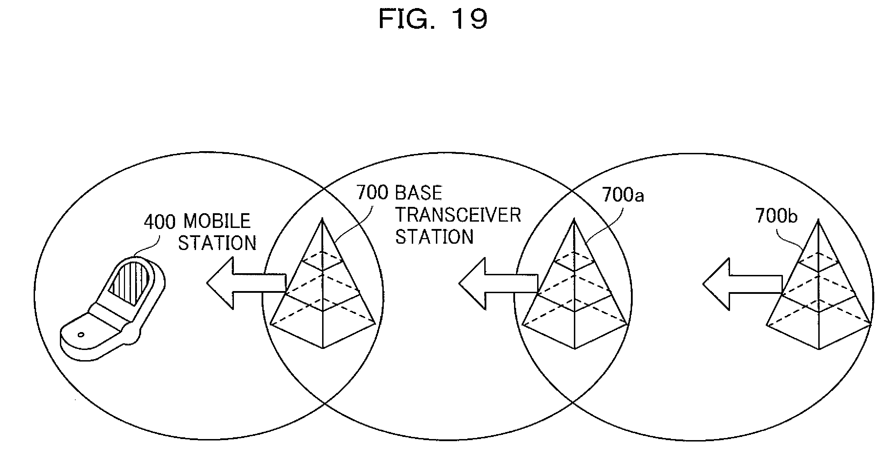

FIG. 19 illustrates a system configuration according to the sixth embodiment. The wireless communication system according to the sixth embodiment is configured so that a base transceiver station uses a directional antenna to form its coverage area. The wireless communication system includes a mobile station 400 and base transceiver stations 700, 700a, 700b. The mobile station 400 is similar to that described in the third embodiment.

The base transceiver stations 700, 700a, 700b are radio communication apparatuses that wirelessly communicate with mobile stations located in their coverage areas. Each of the base transceiver stations 700, 700a, 700b has a directional antenna which radiates a stronger radio signal in a particular direction. Here, the base transceiver station 700 is located in the area covered by the base transceiver station 700a. The base transceiver station 700a is located in the area covered by the base transceiver station 700b.

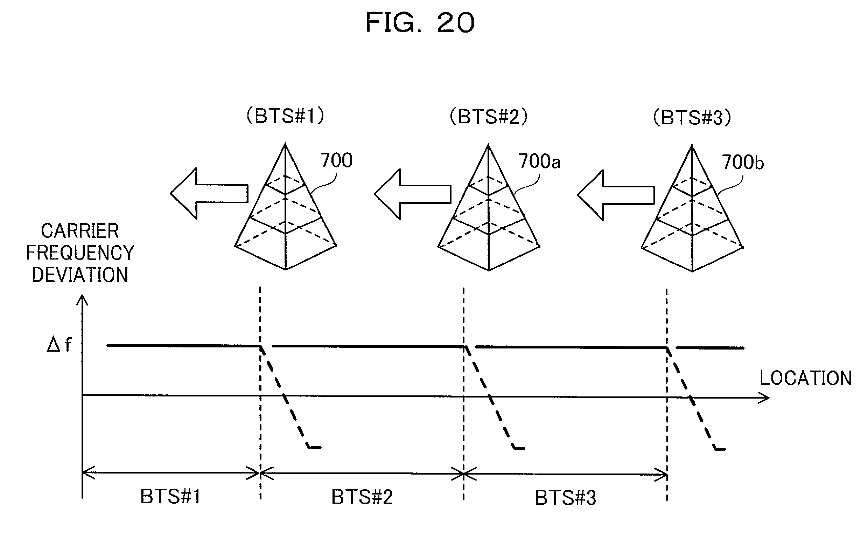

FIG. 20 illustrates changes in carrier frequency in the sixth embodiment. A case is considered here in which a mobile station 400 continues wireless communication while passing by each of the base transceiver stations 700, 700a, and 700b in this order at a high speed.

When the mobile station 400 comes within a predetermined distance of the base transceiver station 700, the mobile station 400 switches the connection to the base transceiver station 700a before passing by the base transceiver station 700. Since the location of the base transceiver station 700 is included in the area covered by the base transceiver station 700a, the switching processing can be performed before the mobile station 400 passes by the base transceiver station 700. The mobile station 400 passes by the base transceiver station 700 while maintaining the connection with the base transceiver station 700a. Accordingly, there is a positive carrier frequency deviation (Δf) before and after the mobile station 400 passes by the base transceiver station 700.

Similarly, when the mobile station 400 comes within a predetermined distance of the base transceiver station 700a, the mobile station 400 switches the connection to the base transceiver station 700b before passing by the base transceiver station 700a. Since the location of the base transceiver station 700a is included in the area covered by the base transceiver station 700b, the switching processing can be performed before the mobile station 400 passes by the base transceiver station 700a. The mobile station 400 passes by the base transceiver station 700a while maintaining the connection with the base transceiver station 700b. Accordingly, there is a positive carrier frequency deviation (Δf) before and after the mobile station 400 passes by the base transceiver station 700a.

In this way, as the mobile station 400 passes by each of the base transceiver stations 700, 700a, and 700b in this order, the mobile station 400 communicates with only a base transceiver station toward which the mobile station 400 is moving. On the other hand, when the mobile station 400 is moving in the opposite direction, that is, passing by each of the base transceiver stations 700b, 700a, and 700 in this order at a high speed, the mobile station 400 communicates with only a base transceiver station from which the mobile station 400 is moving away. In the latter case, switching control as described in the second embodiment is performed.

The wireless communication system according to the sixth embodiment described above allows a mobile station 400 to communicate with only a base transceiver station toward which the mobile station 400 is moving or a base transceiver station from which the mobile station 400 is moving away. Therefore, steep changes in carrier frequency deviation due to quickly passing of the mobile station 400 by the base transceiver stations 700, 700a, and 700b are avoided and more stable wireless communication is provided. The wireless communication system is especially effective for a situation where the direction of motion of a mobile station 400 is limited as in a case where the mobile station 400 is moving along a freeway or railroad.
In a variation of the sixth embodiment, a mobile station 400, instead of the base transceiver stations 700, 700a, 700b, may control switching as has been described in the first embodiment.

### Seventh embodiment

A seventh embodiment will now be described in detail with reference to the drawings. The description will focus on differences from the fourth to sixth embodiments described above and description of items similar to those of the fourth to sixth embodiments will be omitted.

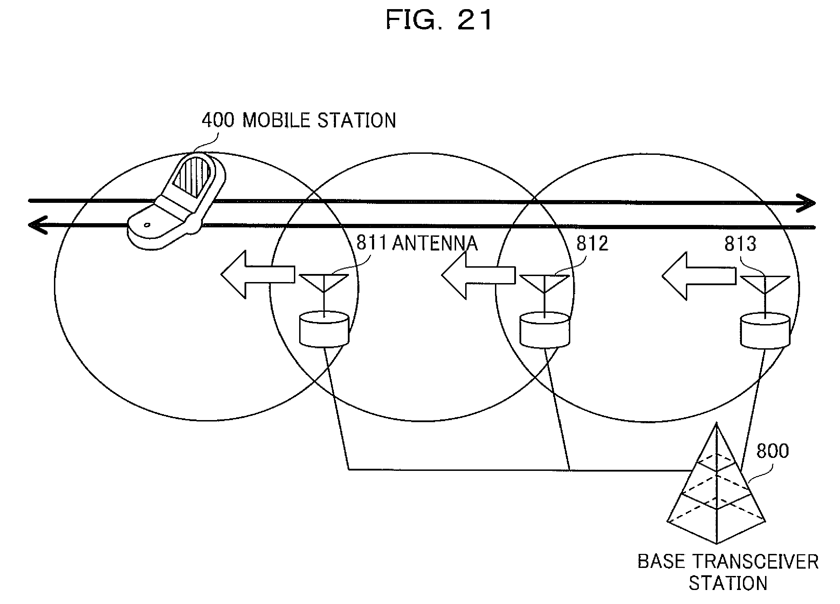

FIG. 21 illustrates a system configuration according to the seventh embodiment. In the wireless communication system according to the seventh embodiment, a base transceiver station uses multiple directional antennas to form multiple coverage areas. The wireless communication system includes a mobile station 400, a base transceiver station 800, and antennas 811, 812, 813. The mobile station 400 is similar to that described in the third embodiment.

The base transceiver station 800 performs multi-antenna communication by using the antennas 811, 812, and 813. That is, the base transceiver station 800 is capable of concurrently receiving received signals from each of the antennas 811, 812, and 813 and concurrently transmitting transmission signals to the antennas 811, 812, and 813. The base transceiver station 800 controls switching between antennas to which a mobile station 400 connects.

The antennas 811, 812, and 813 transmit and receive radio signals to and from mobile stations in their respective coverage areas. The antennas 811, 812, and 813 are installed along a railroad. The antennas 811, 812, 813 are directional antennas that radiate stronger radio signals in particular directions. The antenna 811 is located in the area covered by the antenna 812. The antenna 812 is located in the area covered by the antenna 813.

Here, when a person on a train has a mobile station 400 with him/her, the route on which the mobile station 400 can move is limited to two: the "up" and "down" lines. The base transceiver station 800 holds information that, as described in the fourth embodiment, defines switching patterns for a mobile station 400 that is moving on the up line and for a mobile station 400 that is moving on the down line. When the base transceiver station 800 controls switching, the base transceiver station 800 determines based on the information an antenna to which to switch switching is to be made.

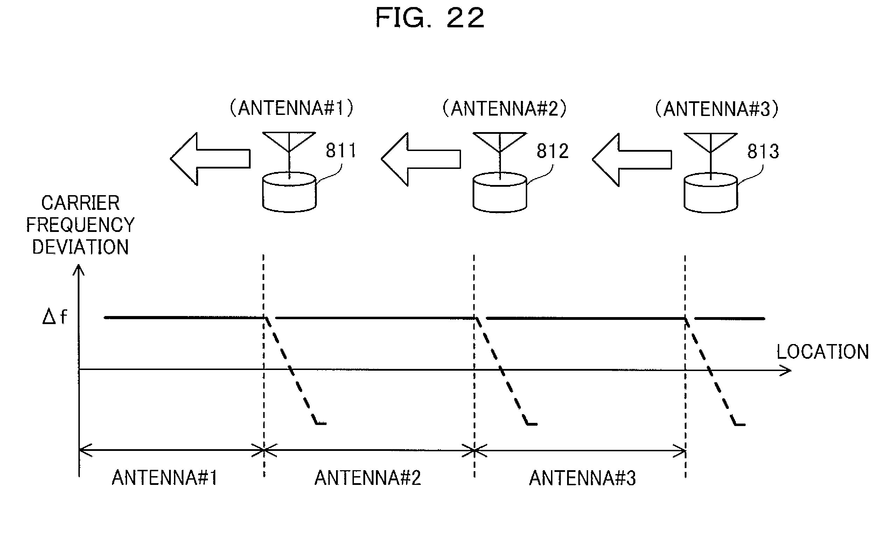

FIG. 22 illustrates carrier frequency changes in the seventh embodiment. A case is considered here in which a mobile station 400 continues wireless communication while passing by each of the antennas 811, 812, and 813 in this order at a high speed.

When the mobile station 400 comes within a predetermined distance of the antenna 811, the mobile station 400 switches the connection to the antenna 812 before passing by the antenna 811. The switching processing can be made before passing by the antenna 811 because the location of the antenna 811 is included in the area covered by the antenna 812. The mobile station 400 passes by the antenna 811 while maintaining the connection with the antenna 812. Accordingly, there is a positive carrier frequency deviation (Δf) before and after the mobile station 400 passes by the antenna 811.

Similarly, when the mobile station 400 comes within a predetermined distance of the antenna 812, the mobile station 400 switches the connection to the antenna 813 before passing by the antenna 812. The switching processing can be made before the mobile station 400 passes by the antenna 812 because the location of the antenna 812 is included in the area covered by the antenna 813. The mobile station 400 passes by the antenna 812 while maintaining the connection with the antenna 813. Accordingly, there is a positive carrier frequency deviation (Δf) before and after the mobile station 400 passes by the antenna 812.

In this way, when the mobile station 400 passes by each of antennas 811, 812, and 813 in this order, the mobile station 400 communicates with only the antenna toward which the mobile station 400 is moving. On the other hand, when the mobile station 400 is moving in the opposite direction, that is, passing by each of the antennas 813, 812, and 811 in this order at a high speed, the mobile station 400 communicates with only the antenna from which the mobile station 400 is moving away. In the latter case, switching control as described in the second embodiment is performed.

The wireless communication system according to the seventh embodiment described above allows a mobile station 400 to communicate with only an antenna toward which the mobile station 400 is moving or with only an antenna from which the mobile station 400 is moving away. Therefore, steep changes in carrier frequency deviation due to the mobile station 400 quickly passing by the antennas 811, 812, 813 are avoided and more stable wireless communication is provided.

Furthermore, by appropriately defining switching patterns for the antennas beforehand, an optimal antenna to which the mobile station is to be connected can be reliably and quickly determined even when the mobile station is moving at a high speed. That is, the number of handovers can be reduced to provide efficient wireless communication. In addition, since connection switching among the antennas 811, 812, and 813 is centrally performed by the base transceiver station 800, communications between base transceiver stations are not required and the load placed on the system when switching control is performed is reduced.

A wireless communication apparatus (mobile station) can also be mounted on a train so that the base transceiver station 800 wirelessly communicates with the mobile station mounted on the train. In this case, the mobile station mounted on the train may report the current location of the train to the base transceiver station 800 on behalf of other mobile stations. In a variation, a mobile station 400, instead of a base transceiver station 800, controls switching as described in the first embodiment. In this case, when the mobile station 400 enters a service area shown in FIG. 21, the base transceiver station 800 may send information defining a switching pattern for the antenna to the mobile station 400.

The base transceiver stations, mobile stations, and wireless communication methods described above are capable of reducing steep changes in carrier frequency deviation by the Doppler effect to provide stable wireless communication.

In regard to the embodiments described above, the following additional descriptions are disclosed.

### (Additional note1)

A mobile station used in a wireless communication system in which the location of each base transceiver station antenna is included in a coverage area of at least one other base transceiver station antenna, the mobile station comprising:
a measuring unit measuring a distance between the mobile station and a candidate base transceiver station antenna to which the mobile station is to be communicatively connected but is not currently communicatively connected; and
a switching unit switching the communication connection of the mobile station to the candidate base transceiver station antenna upon an increase in the distance measured by the measuring unit.

### (Additional note2)

A wireless communication method for a wireless communication system in which the location of each base transceiver station antenna is included in a coverage area of another base transceiver station antenna, the wireless communication method comprising:
measuring a distance between a mobile station and a base transceiver station antenna to which the mobile station is communicatively connected; and
switching the communication connection of the mobile station to another base transceiver station antenna when the measured distance becomes less than or equal to a predetermined value.

### (Additional note3)

A wireless communication method for a wireless communication system in which the location of each base transceiver station antenna is included in a coverage area of at least one other base transceiver station antenna, the wireless communication method comprising:
measuring a distance between a mobile station and a candidate base transceiver station antenna to which the mobile station is to be communicatively connected but is not currently communicatively connected; and
switching the communication connection of the mobile station to the candidate base transceiver station antenna upon an increase in the measured distance.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. A base transceiver station used in a wireless communication system in which a location of each base transceiver station antenna is included in a coverage area of at least one other base transceiver station antenna, the base transceiver station comprising:
a measuring unit measuring a distance between a mobile station and a base transceiver station antenna to which the mobile station is communicatively connected; and
a switching unit switching the communication connection of the mobile station to another base transceiver station antenna when the distance measured by the measuring unit becomes less than or equal to a predetermined value.

2. The base transceiver station according to claim 1, wherein the measuring unit further measures a speed of motion of the mobile station; and
the switching unit switches the connection of the mobile station to another base transceiver station antenna when the speed of motion is greater than or equal to a predetermined value.

3. The base transceiver station according to claim 2, wherein the measuring unit measures the speed of motion based on a carrier frequency deviation of a signal received from the mobile station.

4. The base transceiver station according to claim 2, wherein the measuring unit determines the current location of the mobile station and measures the speed of motion based on a change of the determined current location.

5. The base transceiver station according to claim 1, wherein the measuring unit obtains a signal received at each of a plurality of base transceiver station antennas from the mobile station to determine the current location of the mobile station and measures the distance based on the determined current location.

6. The base transceiver station according to claim 1, wherein the switching unit associates a direction of motion with a base transceiver station antenna to which switching is to be made and makes switching to a base transceiver station antenna according to the current direction of motion of the mobile station.

7. The base transceiver station according to claim 1, wherein the switching unit controls switching to allow the mobile station to perform diversity communication using both the base transceiver station antenna from which the communication connection is switched and a base transceiver station antenna to which the communication connection is switched.

8. A base transceiver station used in a wireless communication system in which the location of each base transceiver station antenna is included in a coverage area of at least one other base transceiver station antenna, the base transceiver station comprising:
a measuring unit measuring a distance between a mobile station and a candidate base transceiver station antenna to which the mobile station is to be communicatively connected but is not currently communicatively connected; and
a switching unit switching the communication connection of the mobile station to the candidate base transceiver station antenna upon an increase in the distance measured by the measuring unit.

9. A mobile station used in a wireless communication system in which the location of each base transceiver station antenna is included in a coverage area of at least one other base transceiver station antenna, the mobile station comprising:
a measuring unit measuring a distance between the mobile station and a base transceiver station antenna to which the mobile station is communicatively connected; and
a switching unit switching the communication connection of the mobile station to another base transceiver station antenna when the distance measured by the measuring unit becomes less than or equal to a predetermined value.

10. The mobile station according to claim 9, wherein the measuring unit further measures a speed of motion of the mobile station; and
the switching unit switches the communication connection of the mobile station to another base transceiver station antenna when the speed of motion is greater than or equal to a predetermined value.

11. The mobile station according to claim 10, wherein the measuring unit measures the speed of motion based on a carrier frequency deviation of a signal received from a base transceiver station antenna to which the mobile station is communicatively connected.

12. The mobile station according to claim 10, wherein the measuring unit determines the current location of the mobile station and measures the speed of motion based on a change of the determined current location.

13. The mobile station according to claim 9, wherein the measuring unit determines the current location based on a known signal received from each of a plurality of base transceiver station antennas and measures the distance based on the determined current location.

14. The mobile station according to claim 9, wherein the measuring unit determines the current location using a GPS and measures the distance based on the determined current location.

15. The mobile station according to claim 9, wherein the switching unit controls switching to allow the mobile station to perform diversity communication by using both a base transceiver station antenna from which the communication connection is switched and a base transceiver station antenna to which the communication connection is switched.
